# EUROPEAN PATENT APPLICATION

(11) **EP 1 484 264 A1**
(43) Date of publication of application: **08.12.2004**
(21) Application number: 04012889.4
(22) Date of filing: 01.06.2004
(51) Int. Cl.: B65F 1/10, B65F 1/14

(54) **Waste collection device**

(30) Priority: 06.06.2003 IT MN20030024
(71) Applicant: Galeazzi, Carlo, 46049 Volta Mantovana (Mantova) (IT); Galeazzi, Gianpietro, 46049 Volta Mantovana (Mantova) (IT)
(72) Inventor: Galeazzi, Carlo, 46049 Volta Mantovana (Mantova) (IT); Galeazzi, Gianpietro, 46049 Volta Mantovana (Mantova) (IT)
(74) Representative: Modiano, Guido, Dr.-Ing.

(57) **Abstract**

A waste collection device comprising, inside a pit, a vertically movable structure (1) that comprises a base (3) for supporting a plurality of containers (4-7), a cover (8) provided with a post (10) for the insertion of waste, and an openable cradle (12) that is adapted to receive the waste by gravity when it is inserted in the post (10), the cradle being associated with management means (13, 13a, 14, 15), which are adapted to guide the cradle (12) from the position at the post (10) to positions above each one of the containers (4-7) that rest on the base (3) of the structure.

## Description

The present invention relates to a waste collection device.

It is known that one of the systems currently used to collect municipal solid waste provides, in a pit formed in the road surface, a structure that comprises a base suitable to support at least one container and an overlying cover provided with at least one post for waste insertion.

Such structure is provided with movement means, which act between the bottom of the pit and the base of the structure and are suitable to produce a translational motion between a lower stroke limit position, in which the cover is at the level of the road surface that surrounds the pit, and an upper stroke limit position, in which the base is at such level.

Devices of the described type have been proposed by the same Applicants and disclosed in corresponding patent applications, but continuing research has allowed to achieve further improvements, for which protection is now sought.

The aim of the present invention is to provide a waste collection device that has improved characteristics with respect to currently known devices.

The proposed aim is achieved by a waste collection device according to the invention, which comprises, inside a pit, a structure that comprises a base adapted to support a plurality of containers and a cover provided with a post for the insertion of waste, and is provided with actuation means that act between the bottom of the pit and said base and are adapted to produce a vertical translational motion between a lower stroke limit, in which said cover is at the level of the surface that surrounds the pit, and an upper stroke limit, in which said base is at said level, characterized by the presence of an openable cradle that is suitable to receive the waste by gravity when the waste is inserted in the post, said cradle being associated with management means that are adapted to guide said cradle from the position at the post to positions that lie above each one of the containers that rest on the base of the structure.

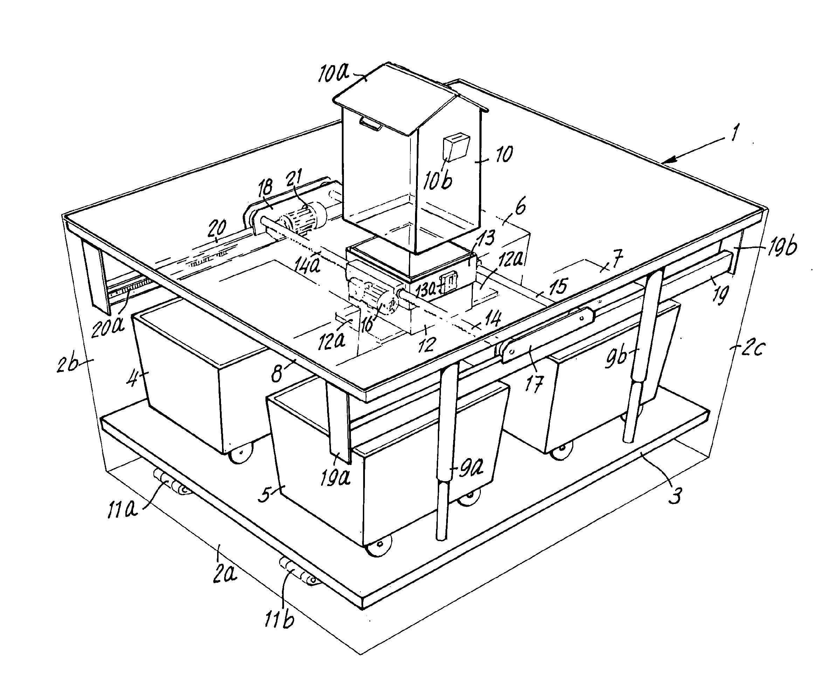

Further characteristics and advantages will become better apparent from the description of a preferred but not exclusive embodiment of the invention, illustrated by way of nonlimiting example in the accompanying drawings, wherein the only figure is a perspective view of the device according to the invention with parts shown in phantom lines.

With reference to the figure, the reference numeral 1 generally designates the structure accommodated in the pit, which has a bottom 2a and walls such as 2b, 2c.

Said structure comprises the base 3, which is adapted to support the four containers 4, 5, 6 and 7, formed by waste collection bins, and the cover 8, which is connected to the base by means of uprights such as 9a and 9b and is provided with the post 10 for the insertion of waste, with a lid 10a that is controlled by the lock 10b and is adapted to be opened by inserting a card that is personalized for each user.

Means, constituted for example by a pantograph lifting unit, of which the ends 11a and 11b are shown, act between the bottom 2a of the pit and the base 3 and are adapted to produce the translational motion of the structure 1 between the stroke limit position shown in the figure, in which the cover 8 is at the level of the paving that surrounds the pit, and an upper stroke limit position, in which the base 3 is at said level.

It is evident that the position shown in the figure is the one assumed normally, in which the users insert the waste bags in the post 10, while the upper stroke limit position is assumed when it is necessary to empty the bins that rest on the base 3 by extracting them from said base.

All this occurs in a known manner.

An important feature of the invention is the presence, below the cover 8, of the cradle 12 with an openable bottom 12a, which is adapted to receive by gravity the waste upon insertion in the post 10 when it is in the position shown in the figure; the cradle is associated with management means adapted to guide it from said position to positions that lie above each one of the containers 4, 5, 6 and 7.

More specifically, the cradle 12 is associated, with the interposition of weighing means 13a, with the carriage 13, which can slide on the guides 14 and 15 and is provided with means for movement thereon, which comprise the electric gearmotor 16, which drives a pinion that is mated with the rack 14a provided on the guide 14.

The guides 14 and 15 are supported at their ends by the heads 17 and 18, which can slide on the guides, respectively 19 and 20, which are supported by the cover 8 at the lower surface by means of end plates that are fixed to the surface, such as for example 19a, 19b for the guide 19.

The assembly formed by the guides 14 and 15 and the corresponding heads 17 and 18 is moved on the guides 19 and 20 by way of means that comprise the electric gearmotor 21, which drives a pinion that is mated with the rack 20a provided on the guide 20.

When a user, after performing identification by inserting his card in the lock 10b and consequently achieving the opening of the cover 10a of the post 10, inserts a bag of waste in said post, said bag falls directly into the cradle 12, which is located in the position shown in the figure and has its bottom closed, with immediate weighing performed by the means 13a and subsequent movement of said cradle, adjusted by control means comprised in the management means, not shown, so as to make it lie above one of the containers 4, 5, 6 and 7.

The control means can comprise, if one wishes to provide sorted waste collection, a keypad for user selection of the container to which the cradle is to be sent to unload the waste, depending on the type of waste.

The cradle can be provided with means that are suitable to detect the level reached by the waste in a container arranged below it and to send to the control means a signal that stops the loading of a certain container when it is full and moves on to the loading of another container.

Once the cradle has been arranged in one way or another above the suitable container, the bottom 12a of the cradle is opened, so that the bag contained therein falls into the underlying container, and the cradle is immediately returned to the position shown in the figure, ready to receive a new bag.

The described invention is susceptible of numerous modifications and variations, all of which are within the scope of the inventive concept; thus, for example, the movement means of the cradle 12 can be provided in any form, and the weighing means of the cradle can be replaced with means adapted to detect the volume of the waste.

The disclosures in Italian Patent Application no. MN2003A000024, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A waste collection device comprising, inside a pit, a structure that comprises a base adapted to support a plurality of containers and a cover provided with a post for the insertion of waste, and is provided with actuation means that act between the bottom of the pit and said base and are adapted to produce a vertical translational motion between a lower stroke limit, in which said cover is at the level of the surface that surrounds the pit, and an upper stroke limit, in which said base is at said level, **characterized by** the presence of an openable cradle that is suitable to receive the waste by gravity when said waste is inserted in the post, said cradle being associated with management means that are adapted to guide said cradle from the position at the post to positions that lie above each one of the containers that rest on the base of the structure.

2. The device according to claim 1, **characterized by** the presence of a cradle with an openable bottom, which is associated with a carriage that is provided with means for moving on guides that are supported at their ends by heads provided with means for movement on respective guides that are supported by the cover of the structure at the lower surface.

3. The device according to one or more of the preceding claims, **characterized by** the presence of means for weighing the cradle, the waste insertion post being provided with a lid that has a lock adapted to be opened by inserting a card that is personalized for each user.

4. The device according to one or more of the preceding claims, **characterized by** the presence of means that are adapted to detect the volume of the waste introduced in the cradle, the waste insertion post being provided with a lid that has a lock suitable to be opened by inserting a card that is personalized for each user.

5. The device according to one or more of the preceding claims, **characterized in that** the cradle management means comprise actuation means, which are adapted to perform sorted waste collection by dividing the waste by type in the various containers that rest on the base of the structure.

6. The device according to one or more of the preceding claims, **characterized in that** the cradle management means comprise means that are adapted to detect the level reached by the waste in the container located below said cradle, and to send to actuation means a signal to stop the loading of a container when said container is full and to move on to filling a different container.
